# EUROPÄISCHE PATENTANMELDUNG

(11) **EP 0 922 890 A2**
(43) Veröffentlichungstag der Anmeldung: **16.06.1999**
(21) Anmeldenummer: 98119112.5
(22) Anmeldetag: 09.10.1998
(51) Int. Cl.: F16J 15/32

(54) **Verfahren zur Herstellung eines Dichtrings**

(30) Priorität: 12.12.1997 DE 19755391
(71) Anmelder: Firma Carl Freudenberg, 69469 Weinheim (DE)
(72) Erfinder: Wallat, Gerhard, 69493 Hirschberg (DE)

(57) **Zusammenfassung**

Verfahren zur Herstellung eines Dichtrings (1), bei dem aus einem Blech zunächst ein Hohlzylinder (5, 6) gebildet wird, der durch eine Nachverformung in die Gestalt eines Versteifungsringes (2) überführt und nachfolgend mit einer Dichtlippe aus polymerem Werkstoff verbunden wird, wobei das Blech durch Einrollen abfallfrei in die Gestalt eines Hohlzylinders (5, 6) überführt wird.

## Beschreibung

### Technisches Gebiet

Die Erfindung betrifft ein Verfahren zur Herstellung eines Dichtrings, bei dem aus einem Blech zunächst ein Hohlzylinder gebildet wird, der durch eine Nachverformung in die Gestalt eines Versteifungsringes überführt und nachfolgend mit einer Dichtlippe aus polymerem Werkstoff verbunden wird.

### Stand der Technik

Ein solches Verfahren ist bekannt. Die einzelnen Hohlzylinder werden dabei durch Ausstanzen von Ronden aus einem Blechband gewonnen, was die Entstehung erheblicher Abfallvolumina bedingt und insofern wenig wirtschaftlich ist.

Aus dem Bereich der Radherstellung ist es bekannt, die benötigten Felgen durch Einrollen eines Blechbandes in die Gestalt eines Hohlzylinders zu überführen, der einer Nachverformung unterworfen wird. Die Entstehung von Abfällen wird dabei vermieden. Dennoch ist eine Übertragung dieser Technologie auf das Gebiet der Herstellung von Dichtringen an dem Vorurteil gescheitert, daß die dort vorgeschriebene Herstellgenauigkeit unter Anwendung eines solchen Verfahrens nicht erreichbar sei. Trotz der in dieser Branche angespannten, wirtschaftlichen Lage werden daher bis zum heutigen Tage die für die Herstellung von Wellendichtringen benötigten Versteifungsringe ausschließlich aus Ronden erzeugt, die durch Ausstanzen aus einem Blechband gewonnen worden sind.

### Darstellung der Erfindung

Der Erfindung liegt die Aufgabe zugrunde, ein Verfahren der eingangs genannten Art zu zeigen, daß es erlaubt, die für die Herstellung von Dichtringen benötigten Versteifungsringe wirtschaftlicher als bisher und mit vergleichsweise besserer Formgenauigkeit und Festigkeit zu erzeugen.

Diese Aufgabe wird erfindungsgemäß bei einem Verfahren der eingangs genannten Art dadurch gelöst, daß das Blech durch Einrollen abfallfrei in die Gestalt des Hohlzylinders überführt wird. Trotz der erheblichen, über 50% liegenden Materialersparnis im Vergleich zum bekannten Verfahren wird dabei eine ausgezeichnete Formtreue erreicht. Im bezug auf die Herstellung von Dichtringen ergibt sich dadurch eine wesentliche wirtschaftliche Entlastung.

Daneben ist es von erheblicher Bedeutung, daß die kristalline Werkstofforientierung in allen Umfangsbereichen übereinstimmend ausgebildet ist. Hieraus resultiert eine vergleichsweise verbesserte Festigkeit.

Außerdem werden in zwei senkrecht zueinander vermessenen Richtungen voneinander abweichende Druchmesser vermieden, wie sie zwangsläufig auftreten, wenn aus einem in einer Richtung gewalzten Blechband runde Stanzlinge erzeugt und durch Tiefziehen nachträglich umgeformt werden. Die Formtreue ist dementsprechend verbessert. Die erfindungsgemäßen Ringe sind völlig rotationssymetrisch ausgebildet. Nachträglich angeformte Dichtlippen aus polymerem Werkstoff, beispielsweise aus Gummi, werden während der Lagerung nicht mehr in den verschiedenen Umfangsbereichen unterschiedlich gedehnt.

Die Dichtlippe aus polymerem Werkstoff kann auch unabhängig von dem eigentlichen Versteifungsring erzeugt und nachträglich mit diesem verbunden werden. Insbesondere Dichtlippen aus PTFE werden häufig auf diese Weise festgelegt.

Beim unmittelbaren Anformen der Dichtlippe an den Versteifungsring hat es sich in Hinblick auf die Erzielung einer guten Haftfestigkeit als vorteilhaft bewährt, wenn das Blech vor seiner Überführung in die Gestalt des Hohlzylinders mit einer Perforierung und/oder Haftmittelbeschichtung versehen wird. Beides kann in kontinuierliche arbeitenden Verfahren bewirkt werden.

Das Blech kann vor seiner Überführung in die Gestalt des Hohlzylinders in Längs- und/oder Umfangsrichtung abgelängt werden. Es ist somit beispielsweise möglich, das Blech zunächst in die Gestalt eines dünnwandigen Rohres zu überführen, von dem aufeinanderfolgend Hohlzylinder abgestochen und nachfolgend der Nachverformung unterworfen werden. Desweiteren ist es möglich, aus dem Blech Streifen zu bilden, die zunächst nur in axialer Richtung abgelängt sind und die vor oder nach ihrer Überführung in die Gestalt des Hohlzylinders in Umfangsrichtung abgelängt werden. Im letztgenannten Falle ergibt sich die Möglichkeit, die einzelnen Hohlzylinder aus einem Blechband zu erzeugen, das kontinuierlich fortschreitend von einem Coil abgewickelt wird. In bezug auf die massenhafte Herstellung von Dichtringen kann das von großem Vorteil sein.

Im allgemeinen wird ein Herstellungsprozeß bevorzugt, bei dem ein Blechstreifen in die Gestalt des Hohlzylinders überführt wird, dessen vorderes Ende zunächst parallel zu einer fiktiven Achse ausgerichtet und nachfolgend in gleichbleibendem Abstand um die Achse herumgeführt wird. Es ist jedoch auch möglich, das vordere Ende quer zu der fiktiven Achse anzuordnen und in gleichbleibendem Abstand um die Achse herumzuführen. Der schließlich erhaltene Hohlzylinder hat bei einer solchen Verfahrensweise die Gestalt einer Ronde und läßt sich dementsprechend nachverformen, ohne daß es der Beschaffung von Tiefziehwerkzeugen bedarf, die sich von den bisher schon verwendeten unterscheiden. Im Sinne der Terminologie der vorliegenden Patentanmeldung wird auch eine solche Ronde als Hohlzylinder bezeichnet.

Dichtringe werden sehr häufig in Bohrungen eingepreßt in denen der enthaltene Versteifungsring nur auf Druck beansprucht ist. Je nach Bauform kann es daher genügen, wenn die in dem Hohlzylinder einander gegenüberliegenden Enden unnachgiebig aufeinander abgestützt sind, beispielsweise durch stumpfes Aufeinanderstoßen der Enden und gegebenenfalls Ausfüllen und Abdichten von verbleibenden Freiräumen mit unporösem polymerem Werkstoff. Insbesondere bei Dichtringen, bei denen der Versteifungsring vollständig in den die Dichtlippe bildenden, polymeren Werkstoff eingebettet ist, kann eine solche Ausbildung des Versteifungsringes den bestehenden Anforderungen vollständig genügen.

Eine in mechanischer Hinsicht widerstandsfähigere Bauform wird erhalten, wenn die einander gegenüberliegenden Enden des Blechs durch eine gegenseitige Verkrallung verbunden werden. Sie sind bei einer solchen Bauform formschlüssig aneinander festgelegt, wobei die Festigkeit der Verbindung von besonders guter Dauerhaftigkeit ist, wenn evtl. zurückbleibende Freiräume im Sinne der vorstehenden Darlegungen mit polymerem Werkstoff ausgefüllt sind.

Die plastische Nachverformung des Hohlzylinders gestaltet sich besonders einfach, wenn die einander gegenüberliegenden Enden des darin enthaltenen Blechs durch gegenseitige Verschweißung oder Hartlötung verbunden werden. Insbesondere die Nachverformung durch Tiefzieh- und/oder Rollprozesse wird hierdurch stark erleichtert.

Im Zuge von derartigen Prozessen kann es vorgesehen sein, daß der Hohlzylinder mit zumindest einem sich in radialer und/oder achsparalleler Richtung erstreckenden Bund versehen wird oder mit zumindest einer sich in radialer und/oder achsparalleler Richtung erstreckenden Welle oder Stufe. Neben einer Verbesserung der mechanischen Widerstandsfähigkeit des Dichtrings läßt sich hierdurch eine bessere Anbindungsmöglichkeit bezüglich der Dichtlippe erreichen. In bezug auf die Gewährleistung einer guten Dauerhaltbarkeit kann das von großem Vorteil sein.

Die Nachverformung der Hohlzylinders kann auch einen Kalibrierprozeß umfassen. Hierdurch lassen sich extrem hohe Genauigkeitsanforderungen erfüllen. Insbesondere im bezug auf die Herstellung von Dichtringen eines kleinen Durchmessers von weniger als 15 mm kann das von entscheidender Bedeutung sein im bezug auf die Verwendung des erfindungsgemäßen Verfahrens für die Herstellung des Versteifungsrings.

### Kurzbeschreibung der Zeichnung

Die Erfindung wird nachfolgend anhand der Zeichnung weiter verdeutlicht. Es zeigen:
- Figuren 1 und 2: eine erste Methode, um ein Blech durch Einrollen abfallfrei in die Gestalt eines Hohlzylinders zu überführen.
- Figur 3: einen Hohlzylinder im Anschluß an die Nachverformung.
- Figur 4: einen Dichtring, der einen nachverformten Versteifungsring enthält.
- Figuren 5 und 6: eine zweite Methode, bei der ein Blech durch Einrollen abfallfrei in die Gestalt eines Hohlzylinders überführt wird.
- Figur 7: die Verwendung eines nach dem erfindungsgemäßen Verfahren erhältlichen Versteifungsringes in einem Dichtring mit einer Dichtlippe aus polymerem Werkstoff.
- Figur 8: einen Hohlzylinder, bei dem die einander gegenüberliegenden Enden des Blechs durch eine gegenseitige Verkrallung verbunden sind.

### Ausführung der Erfindung

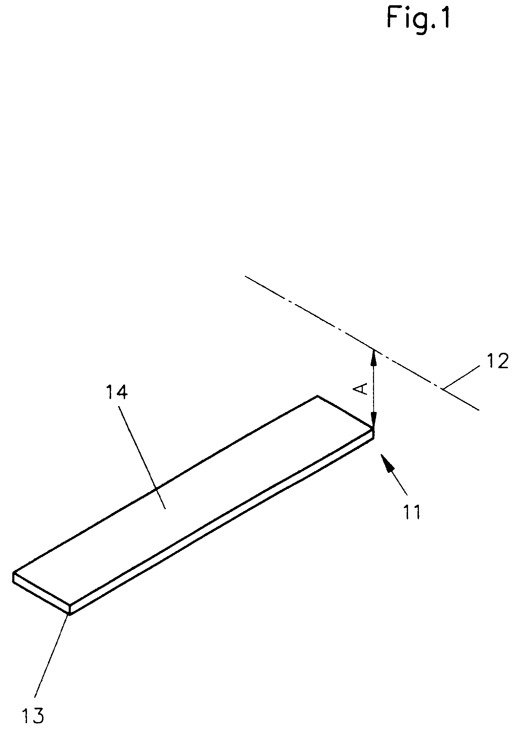

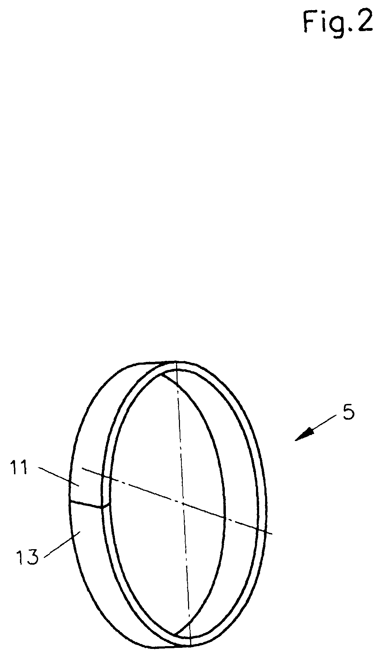

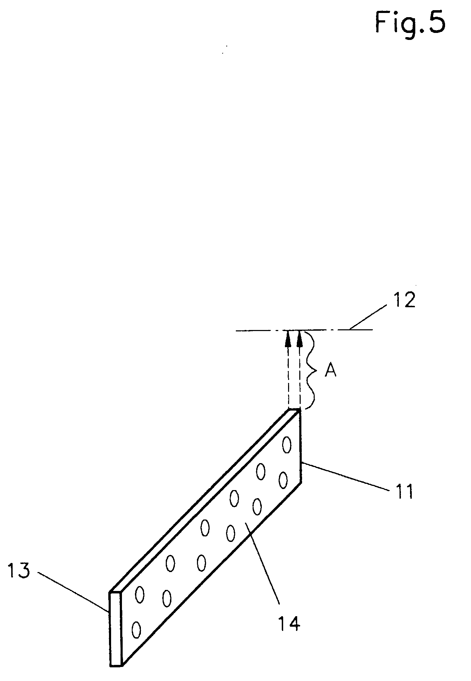

Bei dem in den Figuren 1 und 2 gezeigten Verfahren wird ein Streifen einer Dicke von 0,8 mm aus Stahlblech mit seinem vorderen Ende in dem Abstand A parallel zu einer fiktiven Achse 12 ausgerichtet, der zuvor in Längs- und Umfangsrichtung den Dimensionen des daraus zu erzeugenden Hohlzylinders 5 entsprechend abgelängt ist. Das vordere Ende 11 wird in dem gleichbleibenden Abstand A um die fiktive Achse 12 herumgeführt, bis das vordere Ende 11 das rückwärtige Ende 13 erreicht. Um im Bereich der Enden 11, 12 eine dem übrigen Hohlzylinder 5 entsprechende Verformung zu erreichen, kann es zweckmäßig sein, den Blechstreifen 14 in diesen Bereichen dem Einrollprozeß vorausgehend mit einer gleichgerichteten Einwölbung zu versehen. Das Einrollen kann unter Verwendung von Rollwerkzeugen bewirkt werden. Der fertige Hohlzylinder ist in Figur 5 gezeigt. Die Enden 11, 13 können durch eine gegenseitige Verschweißung unverrückbar aneinander festgelegt sein.

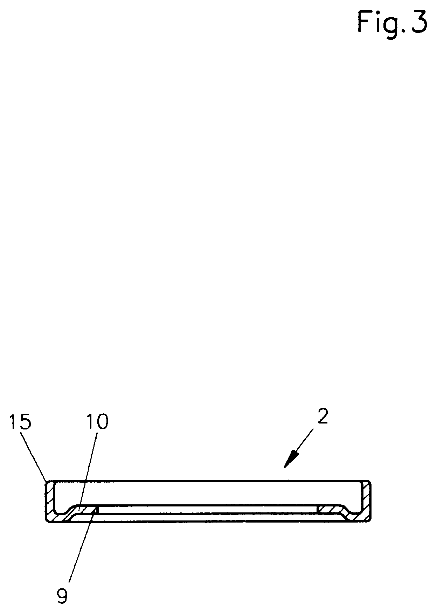

Der Hohlzylinder 5 wird im Anschluß an seine Bildung einer Nachverformung durch einen Tiefziehprozeß unterworfen und hierdurch in die Gestalt des gebrauchsfertigen Versteifungsringes 2 überführt. Eine beispielhafte Ausführung ist in Figur 3 gezeigt. Das Profil des Hohlzylinders wurde dabei im Bereich des unteren Endes mit einem sich in radialer Richtung nach innen erstreckenden Bund 9 versehen sowie mit einer Stufe 10. Die mechanische Widerstandsfähigkeit des Versteifungsringes wird dadurch wesentlich vergrößert und die Anbindung einer nachträglich anzuformenden Dichtlippe aus Gummi vereinfacht. Am gegenüberliegenden Ende wurde das Profil des Hohlzylinders mit einer Einwölbung 15 versehen, die die Montierbarkeit des gebrauchsfertigen Dichtrings erleichtert.

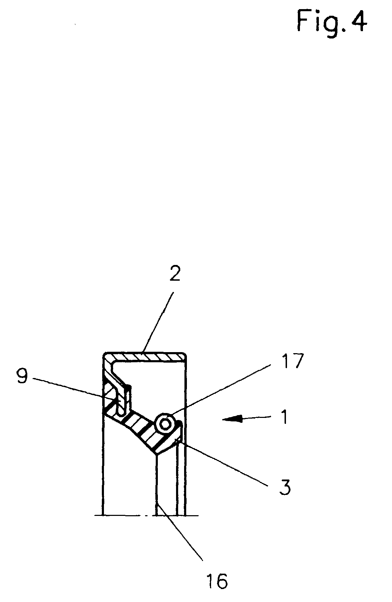

Figur 4 zeigt einen gebrauchsfertigen Dichtring, der einen nach dem vorstehend beschrieben Verfahren erhaltenen Versteifungsring 2 umfaßt. Der radial nach innen weisende Bund 9 trägt eine unmittelbar angeformte und durch eine Vulkanisation verfestigte Dichtlippe 3 aus Gummi. Diese ist radial außerhalb der Dichtkante mit einer umlaufenden Nut versehen, in die eine Ringwendelfeder 17 aus Metall eingefügt ist. Entsprechende Dichtringe gelangen überwiegend bei der Abdichtung sich drehender Wellen zur Anwendung.

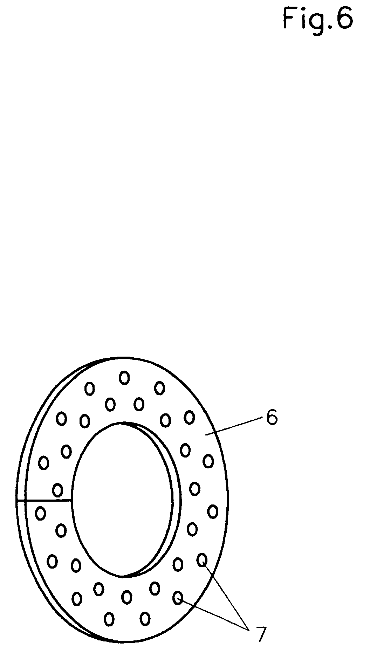

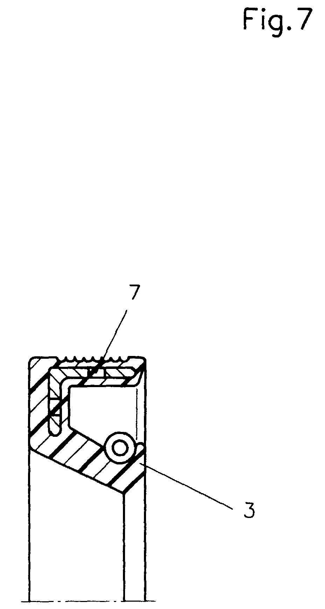

Die Figuren 5 und 6 verdeutlichen ein alternatives Verfahren zur Herstellung des Hohlzylinders durch Einrollen. Dabei wird ein Streifen, dessen Länge in Längs- und Umfangsrichtung den entsprechenden Werten des Hohlzylinders nach Figur 6 entspricht, mit seinem vorderen Ende 11 quer zu einer fiktiven Achse 12 ausgerichtet und nachfolgend in dem gleichbleibenden Anstand A um die Achse 12 herumgeführt, bis die Gestalt des Hohlzylinders bzw. einer Ronde gemäß Figur 6 erreicht ist. Der Streifen 14 ist seiner Verformung vorausgehend mit einer Perforierung 7 versehen worden sowie mit einer in der Zeichnung nicht erkennbaren Haftmittelbeschichtung. Die Nachverformung kann im Sinne der vorstehenden Darlegungen durch Tiefziehen und / oder Rollen erfolgen. Die Verwendung eines solcher Art erzeugten Versteifungsringes ist in Figur 7 gezeigt. Die Perforierung 7 ist durch den zugleich die Dichtlippe 3 bildenden, ungeschäumten, polymeren Werkstoff vollständig ausgefüllt und hiervon durchdrungen. Eine zerstörungsfrei Ablösung der Dichtlippe 3 ist dadurch von dem Versteifungsring nicht möglich.

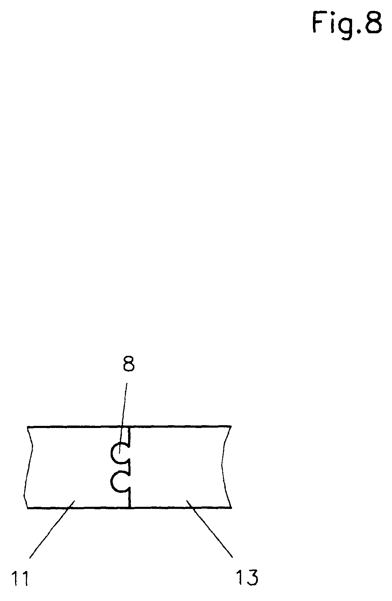

In Figur 8 ist ein Hohlzylinder gezeigt, bei dem die beiden Enden 11, 13 durch eine gegenseitige Verkrallung 8 verbunden sind. Die Enden 11, 13 sind hierdurch für eine Nachverformung hinreichend verbunden.

## Patentansprüche

1. Verfahren zur Herstellung eines Dichtrings (1), bei dem aus einem Blech zunächst ein Hohlzylinder (5, 6) gebildet wird, der durch eine Nachverformung in die Gestalt eines Versteifungsringes (2) überführt und nachfolgend mit einer Dichtlippe aus polymerem Werkstoff verbunden wird, **dadurch gekennzeichnet**, daß das Blech durch Einrollen abfallfrei in die Gestalt des Hohlzylinders (5, 6) überführt wird.

2. Verfahren nach Anspruch 1, dadurch gekennzeichnet, daß das Blech vor seiner Überführung in die Gestalt des Hohlzylinders (5, 6) mit einer Perforierung (7) und / oder Haftmittelbeschichtung versehen wird.

3. Verfahren nach Anspruch 1 oder 2, dadurch gekennzeichnet, daß das Blech vor seiner Überführung in die Gestalt des Hohlzylinders (5, 6) in Längs- und/oder Umfangsrichtung abgelängt wird.

4. Verfahren nach einem der Ansprüche 1 bis 3, dadurch gekennzeichnet, daß das Blech nach seiner Überführung in die Gestalt des Hohlzylinders (5, 6) in Längs- und/oder Umfangsrichtung abgelängt wird.

5. Verfahren nach einem der Ansprüche 1 bis 4, dadurch gekennzeichnet, daß die in dem Hohlzylinder (5, 6) einander gegenüberliegenden Enden des Blechs durch eine gegenseitige Verkrallung (8) verbunden werden.

6. Verfahren nach einem der Ansprüche 1 bis 5, dadurch gekennzeichnet, daß die in dem Hohlzylinder (5, 6) einander gegenüberliegenden Enden des Blechs durch gegenseitige Verschweißung oder Hartlötung verbunden werden.

7. Verfahren nach einem der Ansprüche 1 bis 6, dadurch gekennzeichnet, daß die Nachverformung einen Tiefzieh- und/oder Rollprozeß umfaßt.

8. Verfahren nach einem der Ansprüche 1 bis 7, dadurch gekennzeichnet, daß der Hohlzylinder (5, 6) im Zuge der Nachverformung mit zumindest einem sich in radialer und/oder achsparalleler Richtung erstreckenden Bund (9) versehen wird.

9. Verfahren nach einem der Ansprüche 1 bis 8, dadurch gekennzeichnet, daß der Hohlzylinder (5, 6) im Zuge der Nachverformung mit zumindest einer sich in radialer und/oder achsparalleler Richtung erstreckenden Welle oder Stufe (10) versehen wird.

10. Verfahren nach einem der Ansprüche 1 bis 9, dadurch gekennzeichnet, daß die Nachverformung einen Kalibrierprozeß umfaßt.

11. Verwendung des nach dem Verfahren gemäß Anspruch 1 bis 10 erhältlichen Versteifungsring (2) in einem Dichtring (1) mit einer Dichtlippe (3) aus polymerem Werkstoff.
